# EUROPÄISCHE PATENTSCHRIFT

(11) **EP 2 025 987 B1**
(45) Veröffentlichungstag und Bekanntmachung des Hinweises auf die Patenterteilung: **27.03.2019**
(21) Anmeldenummer: 08014748.1
(22) Anmeldetag: 15.08.2008
(51) Int. Cl.: F16L 25/00, B29C 45/14

(54) **ANSCHLUSS- ODER VERBINDUNGSTEIL FÜR EINE WELLROHR- ODER WELLSCHLAUCHLEITUNG**
ATTACHMENT OR CONNECTING PART FOR A CORRUGATED PIPE OR CORRUGATED TUBULAR CONDUIT
ELÉMENT DE RACCORDEMENT OU DE LIAISON POUR UNE CONDUITE À TUBE ONDULÉ

(30) Priorität: 15.08.2007 DE 202007011453 U
(43) Veröffentlichungstag der Anmeldung: 18.02.2009
(73) Patentinhaber: AZ Vermögensverwaltung GmbH & Co. KG, 61276 Weilrod (DE)
(72) Erfinder: Zimmermann, Klaus, 61276 Weilrod (DE)
(74) Vertreter: Thomas, Matthias

(56) Entgegenhaltungen:
- WO-A1-00/59990
- WO-A1-2004/018176
- WO-A1-2007/073579
- DE-A1-102005 040 446
- JP-A- 2002 357 292

## Beschreibung

Die Erfindung betrifft Anschluss- oder Verbindungsteile für Wellrohr- oder Wellschlauchleitungen. Die Erfindung betrifft insbesondere Anschluss- oder Verbindungsteile für Wellrohr- oder Wellschlauchleitungen aus metallischen Werkstoffen.

Es ist bekannt, dass Wellrohr- oder Wellschlauchleitungen mit herkömmlichen Verbindungstechniken nur schwer an Leitungssysteme angeschlossen werden können. Um dies zu erreichen, sind Umformvorgänge an den Leitungsenden üblich, damit den jeweiligen Einsatzzwecken entsprechende Möglichkeiten zur Abdichtung erreicht werden.

Es ist auch bekannt, Anschlüsse für aus thermoplastischen Werkstoffen bestehende Wellrohre, wie beispielsweise Staubsaugerrohre, durch Umspritzen des Leitungsendes mit einer thermoplastischen Formmasse zu erreichen. Eine solche Lösung ist in DE 103 48 824 A1 beschrieben. Diese Lösungen sind jedoch nur für untergeordnete Anwendungsfälle geeignet, da die Paarung unterschiedlicher Werkstoffe zumindest die Gefahr in sich birgt, dass in den Verbindungen Undichtheiten auftreten. Deshalb sind solche Lösungen bei Hochdruckleitungen und Leitungen, die dauerhaft dicht sein müssen, ungeeignet.

Es ist bekannt, dass Kunststoffe gegenüber Metallen deutlich größere Ausdehnungskoeffizienten haben. Für den Fachmann liegt deshalb der Schluss nahe, dass beim Umspritzen eines Rohres aus metallischen Werkstoffen mit einem Kunststoff nach dem Erkalten ein fester Presssitz entstehen muss. Tatsächlich bildet sich jedoch unerwartet eine Trennung dergestalt aus, dass das angespritzte Kunststoffteil und die metallische Leitung sich während des Abkühlens voneinander trennen und somit das Kunststoffteil gewöhnlich auf der Leitung drehbar bleibt. Mit einem so ausgestalteten Verfahren lassen sich keine dichten Verbindungen erzeugen. Solcher Art Verbindungen sind deshalb nicht einsetzbar, wenn absolute Dichtheit erforderlich ist oder erhöhte Sicherheitsanforderungen bestehen.

Um diese Probleme lösen zu können, wurde beispielsweise in WO 2004 018176 A1 vorgeschlagen, einen metallischen Fitting so auszuführen, dass er im Verbindungsbereich mit einem mehrlagigen Kunststoffschlauch verteilt angeordnete Nasen aufweist, sodass durch das Einlegen in eine Form und Umspritzen mit Kunststoff eine feste Verbindung erreicht wird. Um Dichtheit sicherzustellen, wird bei dieser Art der Verbindung ein zusätzliches elastisches Dichtelement vorgeschlagen. Unklar bleibt, ob der der Werkstoff des elastischen Dichtelements den Temperaturen beim Umspritzen mit Kunststoff überhaupt standhalten kann.

Ein Vorschlag aus JP 2002 357 292 A sieht vor, eine Anordnung aus einem Kunststoff-Fitting und einem Kunststoff-Wellrohr durch Anspritzen eines umlaufenden Ringes im Verbindungsbereich herzustellen. In Ermangelung zusätzlicher Dichtelemente muss davon ausgegangen werden, dass diese Art der Verbindung nur einem untergeordneten Zweck dienen kann.

Ein Vorschlag aus WO 00 59 990 A1 betrifft eine Verbindung zwischen Kunststoff und einer Metalloberfläche, die in einem ersten Schritt auf eine Metalloberfläche eine adhäsive Polymerkomposition aufträgt, anschließend im Spritzgussverfahren ein verbundenes Bauteil angeformt wird und schließlich durch Anwendung von Wärme die adhäsive Polymermischung aktiviert wird. Das adhäsive Polymer soll vor allem der Gruppe der Thermoplaste entnommen und mit Verdünnungsmitteln und Füllstoffen in seinen Eigenschaften so angepasst werden, dass es in flüssiger oder pastöser Form auf die Metalloberfläche aufgetragen werden kann.

Die in das Metallteil einzubringende Wärme bewirkt auf jeden Fall auch ein teilweises Anschmelzen des im Spritzgussverfahren hergestellten verbundenen Bauteils. Ob die auf die Metalloberfläche aufgetragene Polymerkomposition eventuell entstandene Spalte ausfüllen kann, ob sie beim Einspritzen des Kunststoffes in die Form ganz oder wenigstens teilweise mit aufschmilzt und ob eine dauerhafte Dichtheit auch über ein größeres Temperaturintervall hinweg gewährleistet werden kann, bleibt fraglich.

Um einen Ausweg aus dem oben geschilderten Dilemma zu finden, sind nach einem Vorschlag in WO 2007 073579 A1 eine Reihe von Maßnahmen vorgeschlagen, die eine feste und dichte Verbindung gewährleisten soll. So soll durch Variation des Fülldruckes der Form die Herstellung dichter Verbindungen dienen. Diese Ausgestaltung eines Gießverfahrens ist im Bereich der Spritzgusstechnik allgemein üblich, findet aber eine objektive Grenze bei Wellrohr- oder Wellschlauchleitungen darin, dass die Formstabilität dieser dünnwandigen Leitungen nur begrenzte Druckerhöhungen bei der Gießmasse zulässt. Wenn in der gleichen Druckschrift vorgeschlagen ist, die flüssige Polymermasse mit der Oberfläche des Leitungsendes in Kontakt zu bringen, entspricht dies ebenso den aus der Spritzgusstechnik bekannten Verfahren des Umspritzens metallischer Einlegeteile. Auch insoweit ist dieser Vorschlag ungeeignet, da, wie oben geschildert, keine feste und dichte Verbindung zwischen beiden Teilen zu erhalten ist. Es wird deshalb weiter vorgeschlagen, das Leitungsende gesondert zu heizen, damit die Oberfläche des Kunststoffteiles klebrig wird. Auch damit sind die Unterschiede der Volumenausdehnung beider Teile nicht zu beseitigen. Auch ein Vorschlag aus der gleichen Druckschrift, das eingespritzte Polymer beschleunigt abzukühlen, ist nicht geeignet. Schließlich ist vorgeschlagen, eine Zwischenschicht in Form eines Polymerfilms aus LDPE, HDPE, PVC oder PP einzubringen.

Alle vorgeschlagenen Ausführungsformen dieses Verfahrens führen nicht zu dichten Verbindungen zwischen Leitungsende und Kunststoffteil, die dicht sein müssen, im Höchstdruckbereich eingesetzt werden oder für sicherheitsrelevante Verbindungen zum Beispiel in Gasleitungen eingesetzt werden können.

Es ist eine Verbindungslösung bekannt, bei der 2 Leitungsenden von Wellrohren mit einem Schrumpfschlauch überzogen sind und dieser nach dem Schrumpfen sowohl eine mechanisch feste als auch dichte Verbindung ergeben soll. Nach dem Vorschlag in DE 10 2005 040 446 A1 soll die Dichtheit zusätzlich durch eine wärmeaktivierbare Klebstoffschicht zwischen Rohraußenwand und Innenseite des Schrumpfschlauches erzielt werden.

Die nach diesem Vorschlag erzeugte Verbindung ist nur noch unter Zerstörung lösbar. Zudem genügt sie nur geringen Anforderungen hinsichtlich technischer Parameter.

Es gibt jedoch eine Reihe Anwendungsfälle, bei denen wieder lösbare Anschlüsse von Wellrohren notwendig sind und bei denen gleichzeitig keine extremen Anforderungen an die Druck-, Temperaturbelastbarkeit, Stabilität, Verschleiß- oder Zeitstandfestigkeit gestellt werden. Solcher Art Verbindungen kommen beispielsweise im Bereich von Hausinstallationen (Gas; Wasser), bei Solaranlagen, in Wasch- und Reinigungsgeräten zum Einsatz, da sie dort nur in niederen Druck- und Temperaturbereichen eingesetzt sind und häufig nur im Reparaturfall getrennt werden müssen. Gleichzeitig kommt es aber auf dauerhafte Gas- bzw. Flüssigkeitsdichtheit der Verbindung an. Solcher Art Verbindungen lassen sich beispielsweise mit Kunststoffarmaturen kostengünstig herstellen.

Ein weiteres Erfordernis kann darin bestehen, die Anschluss- oder Verbindungsteile mit in Anwendung befindlichen Systemen kompatibel zu machen.

Es ist bekannt, dass Wellrohre oder -schläuche entweder parallel- oder spiralgewellt ausgeführt sein können. Im Falle der Spiralwellung können herkömmliche elastische Dichtmittel keine dauerhafte Dichtheit garantieren, da die Leitungsenden radial und axial nicht zuverlässig eingeschlossen werden können.

Es ist deshalb Aufgabe der Erfindung, Anschluss- oder Verbindungsteile für Wellrohr- oder Wellschlauchleitungen vorzuschlagen, die leicht, einfach und preiswert herstellbar sind, in Verbindung mit parallel-, spiralgewellten Wellrohren oder solchen mit umgeformten Enden ausführbar sind und darüber hinaus Möglichkeiten schaffen, Verbindungslösungen zu bestehenden Verbindungssystemen des Standes der Technik zu ermöglichen.

Nach der Erfindung wird dies erreicht mit einer Anordnung nach den Merkmalen des Anspruchs 1. Abhängige Ansprüche 2-8 bilden weitere vorteilhaften Ausgestaltungen des Erfindungsgegenstands.

Nachstehend werden in der Beschreibung verwendete Begriffe mit folgendem Bedeutungsinhalt verwendet:
Wellrohr - ist ein weitgehend dimensionsstabiles Wellrohr oder ein weitgehend dimensionsstabiler Wellschlauch. Das heißt, mit einer nur begrenzt änderbaren Geometrie. Die Wellen können parallel oder spiralförmig verlaufend angeordnet sein. Das Rohrende kann zusätzlich verformt sein. Bevorzugte Rohrwerkstoffe sind metallische Werkstoffe oder Kunststoffe.
Formteil - ist ein geometrischer Körper mit einer an den Verwendungszweck angepassten Außenkontur und einer Bohrung, der vorzugsweise aus einem Gusswerkstoff erzeugt ist und eine feste Verbindung zum Wellrohr hat.
Endständige Welle - ist die am Rohrende letzte ausgebildete Welle, sofern diese noch eine Formhinterschneidung an ihrer Außenseite gewährleisten kann. Eine endständige Welle kann auch die Ausformung (Aufweitung) am Ende einer im Übrigen nicht profilierten Leitung sein.
Leitungsende - ist das in etwa im Formteil gefasste Stück des Wellrohres.
Aushärtbare Beschichtung - ist ein Stoff oder ein Stoffgemisch mit einem Eigenschaftsbild, das eine Haftung beim Auftrag auf Bauteiloberflächen gewährleistet und nach Durchführung eines physikalischen und/oder chemischen Prozesses in einen anderen Zustand überführt werden kann.
Anschlussteil - ist ein vorgefertigtes Bauteil, das auf der Anschlussseite Elemente zum Anschluss an bekannte Verbindungsformen hat und an seiner Rückseite wenigstens ein Element besitzt, dass eine Formhinterschneidung ausbildet.
Muffe - ist ein Bauteil, das die Verbindung zwischen Anschlussteil und Leitungsende herstellen kann und dabei mit vorhandenen Formhinterschneidungen korrespondiert.

Erfindungsgemäß wird ein Formteil durch Urformen mit dem Leitungsende eines Wellrohres verbunden oder ein vorbereitetes Anschlussteil mit dem Leitungsende eines Wellrohres durch eine Muffe verbunden. In diesem Fall wird die Muffe durch Urformen erzeugt. Zugleich wird durch die Anordnung einer aushärtbaren Beschichtung auf dem Leitungsende eines Wellrohres und gegebenenfalls auf einen Bereich mit einer Formhinterschneidung an der Rückseite eines Anschlussteils vor dem Formen des Anschluss- oder Verbindungsteiles erreicht, dass ein möglicherweise zwischen Wellrohr und Formteil sich bildender Spalt verschlossen ist.

Hierzu wird auf das Leitungsende und/oder die Formhinterschneidung des Anschlussteils zunächst ein Belag aufgetragen, der als erstes Eigenschaftsbild auf den Teilen haften bleibt und zumindest soweit verfestigt oder antrocknet, dass bei weiteren Herstellungsschritten keine funktionseinschränkende Verletzung dieser Schicht entstehen kann, die den Erfolg der Maßnahme unmöglich machen könnte.

Erfindungsgemäß handelt es sich bei der Beschichtung vorzugsweise um eine Suspension, die eine nachgiebige und/oder sich verfestigende und/oder intumeszierende und/oder quellende Schicht ergibt, die aus einem physikalisch aushärtenden Stoffgemisch, einem reaktionsfähigen Stoffgemisch, einem Flüssigkunststoff oder einem Klebstoff besteht.

Der Ausgangswerkstoff der aushärtbaren Beschichtung kann auf beliebige Weise auf die Außenhaut des Wellrohres aufgetragen und ebenso auf beliebige Weise angetrocknet bzw. verfestigt werden.

Das vorbehandelte Leitungsende des Wellrohres wird bei der ersten Ausgestaltungsform der Erfindung in eine Gussform gegeben, in der ein Teil des Leitungsendes, wenigstens die endständige Welle, zugleich einen Teilbereich der Form bildet. Der nach dem Schließen der Form vorhandene Hohlraum wird anschließend mit einer Formmasse gefüllt.

Nach dem Verfestigen der Formmasse wird die Form entfernt und das Formteil mitsamt dem Wellrohr entformt. Die Außenkontur des Formteiles kann abhängig vom späteren Verwendungszweck bereits die Endform sein oder es sind noch nachfolgende Bearbeitungsgänge auszuführen.

Die aushärtbare Beschichtung befindet sich danach noch auf der Außenseite des Leitungsendes und ist zumindest weitgehend vom Werkstoff des Formteiles umschlossen. Sie bildet eine Zwischenschicht zwischen dem Wellrohr und dem Werkstoff des Formteiles.

Bei der zweiten Ausführungsform der Erfindung wird gemeinsam mit dem vorbehandelten Leitungsende ein Anschlussteil, das an seiner Vorderseite bereits alle für einen späteren Anschluss notwendigen Funktionsteile trägt, in die Gussform eingelegt, wobei beide Teile einen Teil der Gussform bilden. Das Anschlussteil hat an seiner, dem Wellrohr zugewandten Rückseite wenigstens eine Formhinterschneidung. Dies kann beispielsweise ein zylinderförmiger Ansatz mit einer rillenförmigen Vertiefung oder in Fortsetzung des Profils des Wellrohrs eine Wellenform sein. Bei dem nachfolgenden Gussvorgang wird eine Muffe ausgeformt, die das Anschlussteil mit dem Wellrohr formschlüssig verbindet. Dabei kann die Rückseite des Anschlussteils ebenfalls mit der bereits beschriebenen Beschichtung versehen worden sein, um auch hier später eine sichere Abdichtung zu erreichen.

Die aushärtbare Beschichtung befindet sich danach noch auf der Außenseite des Leitungsendes sowie gegebenenfalls an der Rückseite des Anschlussteils im Bereich der dort vorhandenen Formhinterschneidung und ist zumindest weitgehend vom Werkstoff der Muffe umschlossen. Die aushärtbare Beschichtung bildet dabei eine Zwischenschicht zwischen dem Wellrohr und/oder dem Anschlussteil einerseits und der Muffe andererseits.

Die dritte Ausführungsform der Erfindung bedient sich der gleichen Bauteile, wie in der zweiten Ausführungsform der Erfindung beschrieben. Zunächst wird ebenso ein Anschlussteil gegenüber einem Leitungsende eines Wellrohres positioniert. Ebenso wird eine Muffe verwendet, die Anschlussteil und Leitungsende fest miteinander verbindet. Die Muffe kann entweder durch Urformen erzeugt sein oder als vorgefertigtes Bauteil aus einem nachträglich formbaren Werkstoff bestehen. An der Rückseite des Anschlussteils im Bereich der dort angeordneten Formhinterschneidung sowie auf dem Leitungsende ist wiederum eine aushärtbare Beschichtung aufgetragen, durch die eventuell vorhandene Spalte ausgefüllt sind.

ln einem nachfolgenden Arbeitsschritt kann durch ein Nachverformen der Muffe eine Erhöhung der Flächenpressung in den Spalten erreicht werden.

Bei einer anderen Ausführungsform der Muffe wird ein Restspalt bewusst in Kauf genommen und diese so vorgefertigt, dass ein Aufschieben über vorhandene Formhinterschneidungen möglich ist, während durch das Nachformen dann vorhandene Spalte und/oder Hohlräume mit Werkstoff ausgefüllt werden.

Das Nachformen kann abhängig vom Werkstoff der Muffe durch mechanischen Druck oder thermomechanisch erfolgen. Der Umformvorgang kann dabei auch partiell durch Einbringen von Schwingungsenergie, beispielsweise durch Ultraschall, erfolgen. Nach Abschluss des Nachformvorganges erhält die Muffe ihre endgültige Außenform.

Eine bevorzugte Ausführungsform der aushärtbaren Beschichtung besteht in einer Zusammensetzung, die eine gleichgroße Adhäsion gegenüber allen an der Verbindung beteiligten Bauteilen hat.

Eine weitere Ausführungsform der aushärtbaren Beschichtung macht diese beim Gieß- oder Umformvorgang fließfähig. Das heißt, die aushärtbare Beschichtung wird während des Gießvorganges in einen mindestens plastifizierten Zustand überführt und kann so vorhandene Spalte, Hohlräume und dergleichen ausfüllen.

Vorteilhaft ist eine aushärtbare Beschichtung, die nach dem Aushärten elastisch bleibt, im Übrigen aber chemisch und physikalisch inaktiv ist.

Ebenso kann die aushärtbare Beschichtung so gewählt sein, dass sie während des Überganges vom Ausgangs- in den Endzustand ihr Volumen vergrößert und dadurch entstandene Spalte bzw. Hohlräume ausfüllt.

Die aushärtbare Beschichtung kann mit vorteilhaften Wirkungen aus Stoffgruppen mit quellenden Eigenschaften oder von Klebstoffen ausgewählt werden.

Der Urformvorgang kann ein Gieß- oder Spritzgießvorgang oder ein Rüttelvorgang, dem ein Sintervorgang folgen kann, sein. Ist es ein Gießvorgang, kann er in Abhängigkeit von der Art der verwendeten Formmassen auch bei niedrigen Temperaturen erfolgen. In diesem Fall werden aushärtbare polymerisierende oder polykondensierende Beschichtungen bevorzugt, die bei Einwirkung einer erhöhten Temperatur aktiv werden, in einem plastifizierten oder flüssigen Zustand vorhandene Spalte und Hohlräume ausfüllen und anschließend endgültig aushärten.

Erfolgt der Gießvorgang beispielsweise im Rahmen eines Kunststoffspritzgussverfahrens und wird die Formmasse mit erhöhter Temperatur eingebracht, kann in etwa gleichzeitig mit dem Füllvorgang auch der Aushärtevorgang der Beschichtung initiiert werden.

Die verwendete Formmasse ist ein reaktionsfähiges und/oder ein verfestigbares Stoffgemisch, das sich nach dem Erzeugen des Formteils oder der Muffe in einem homogenen und endfesten Zustand befindet. Ebenso kann die Formmasse ein im Ausgangszustand gießfähiger Stoff, eine Schmelze oder ein Komprimat sein. Der endfeste Zustand kann auch durch ausschließlich physikalische Vorgänge erreicht werden.

Besonders vorteilhaft ist es jedoch, eine aushärtbare Beschichtung zu wählen, die auch während des Gießvorganges noch im Ausgangszustand verbleibt und bei der der Übergang in den Endzustand erst nach Vollendung des Gussvorganges eingeleitet wird.

Ebenso ist es möglich, das Zeitintervall des Überganges der aushärtbaren Beschichtung vom Ausgangs- in den Endzustand so zu wählen, dass der Gussvorgang in einem deutlich kürzeren Zeitintervall ausgeführt wird, als das Aushärten der Beschichtung.

Nach der Erfindung kann also ein Eigenschaftsbild der Leitung erreicht werden, bei dem die Funktionsfähigkeit der Leitung durch Festigkeitskennwerte und die Temperaturbeständigkeit der Gussmasse bestimmt wird und die aushärtbare Beschichtung in Verbindung mit dem Werkstoff des Wellrohres deutlich höher belastbar ist. So kann die aushärtbare Beschichtung ein hoch temperaturbeständiger Klebstoff sein, während die Formmasse ein thermoplastischer Kunststoff ist.

Die Verwendung vorgefertigter Anschlussteile ermöglicht es wiederum, den Einfluss von Kennwerten der Gussmasse deutlich zu reduzieren.

Die Erfindung wird nachstehend anhand von Ausführungsbeispielen näher erläutert. Dabei zeigen:

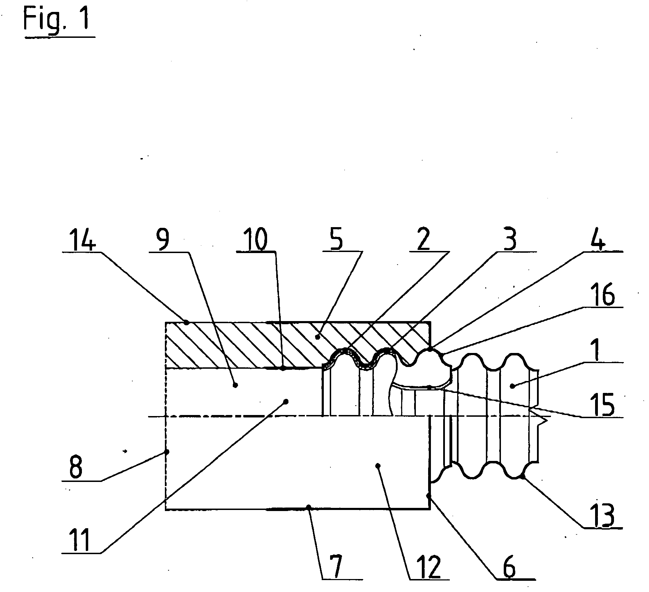

Fig. 1 - eine schematische Darstellung des Anschluss- oder Verbindungsteils für Wellrohr- oder Wellschlauchleitungen mit einem Formteil;
Fig. 2 - eine schematische Darstellung des Anschluss- oder Verbindungsteils für Wellrohr- oder Wellschlauchleitungen mit einer verbindenden Muffe;
Fig. 3 - eine schematische Darstellung des Anschluss- oder Verbindungsteils für Wellrohr- oder Wellschlauchleitungen mit einer verbindenden Muffe, die zusätzlich nachgeformt ist.

Ein Leitungsende (1) eines Wellrohres ist mit seinen endständigen Wellen (2), (3) sowie in etwa bis zum Gipfel der dritten Welle in einem Hohlraum (5) angeordnet und in dieser Lage fixiert. Der Hohlraum (5) wird durch die Stirnseite (6), die Mantelfläche (7) und die vordere Stirnseite (8) gebildet. Ferner ist eine koaxiale Bohrung (9) vorgesehen.

Hintere (6), vordere Stirnseite (8), Mantelfläche (7) und Mantelfläche (10) der koaxialen Bohrung (9) bilden die Begrenzung des Hohlraumes (5) für ein Formteil, das später durch einen Urformprozess das Formteil (12) bildet. Der dazu erforderliche geschlossene Raum wird durch ein Einlegeteil (11) im Bereich der koaxialen Bohrung (9) sowie die Mantelfläche (13) des Leitungsendes (1) eingeschränkt und vervollständigt.

Die geschlossene Form wird durch einen Gussvorgang mit einer Formmasse ausgefüllt. Dabei kann es sich um ein reagierendes Stoffgemisch, einen thermoplastischen Kunststoff (Spritzgussmasse), eine Schmelze oder ein verfestigbares Stoffgemisch handeln.

Die Mantelfläche (7) des auf die oben beschriebene Weise erzeugten Formteiles hat vorzugsweise Handhabungsflächen, wie beispielsweise Flächen für Werkzeugangriff, Rändel, Kordel oder dergleichen, während im Bereich der vorderen Stirnseite (8), im vorderen Bereich der Mantelfläche (14) oder auch im Bereich der Mantelfläche (10) der konzentrischen Bohrung (9) Formen ausgebildet sein können, die das Formteil (12) mit herkömmlichen Verbindungstechniken und Systemen kompatibel machen.

Wenigstens die endständigen Wellen (2), (3) und (4) des Leitungsendes (1) sind mit einer Beschichtung (15) versehen, der auf der Außenseite (16) des Leitungsendes (1) zumindest haftfähig ist. Dieser kann auf beliebige Weise aufgetragen sein. Die aufgetragene Beschichtung (15) ist aushärtbar, das heißt, sie kann von einem vorzugsweise liquiden Ausgangszustand über einen zwischengeschalteten Trocknungsvorgang während oder nach dem Gussvorgang der Formmasse durch chemische oder physikalische Vorgänge in einen zweiten stabilen Zustand übergehen, wobei der Werkstoff eine innige Verbindung zwischen dem Leitungsende (1) des Wellrohres und dem entstandenen Formteil (12) eingeht, möglicherweise dabei sein Volumen vergrößert und jedenfalls vorhandene Spalte und anderweitige Hohlräume ausfüllt.

Abhängig von der Art der Formmasse kann die Zustandsänderung durch das Einströmen der erwärmten Formmasse in die Form und den dabei entstehenden direkten Kontakt mit der Beschichtung (15) oder durch erneute Energiezufuhr nach Fertigstellung der Verbindung bzw. des Formteiles (12) erfolgen.

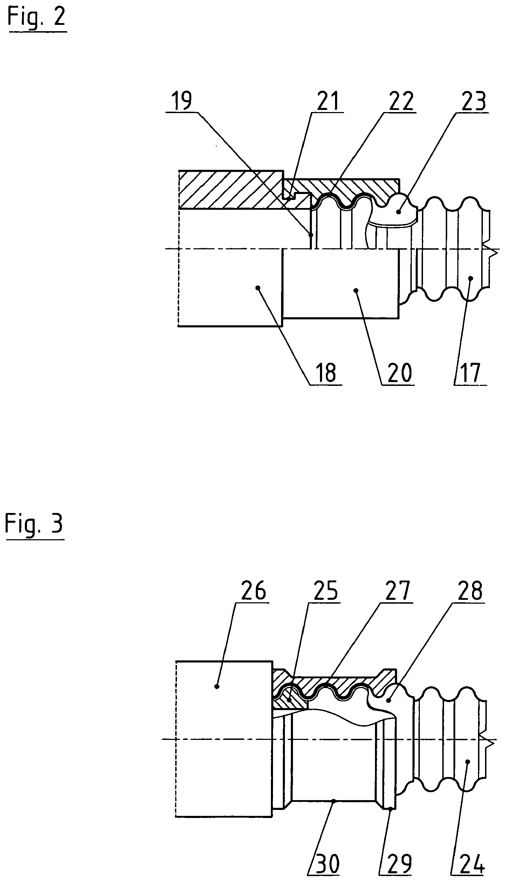

Bei der in Fig. 2 gezeigten Ausführungsform des Anschluss- oder Verbindungsteils wird einem Leitungsende eines Wellrohres (17) ein Anschlussteil (18) so zugeordnet, dass das Wellrohr (17) stirnseitig gegenüber der Rückseite (19) des Anschlussteils (18) abdichtet.

ln dieser Zuordnung liegen Wellrohr (17) und Anschlussteil (18) in einer in Fig. 2 nicht gezeigten Gussform und bilden einen Teil der Formkontur.

Durch einen Urformvorgang wird eine Muffe (20) um die Verbindungsstelle geformt, wobei diese am Anschlussteil (18) in eine Formhinterschneidung in Form einer Rille (21) und am Wellrohr (17) wenigstens am endständigen Wellenberg (22) anliegt und beide Teile formschlüssig fest und unlösbar miteinander verbindet.

Eine Beschichtung (23) auf dem Wellrohr (17) gewährleistet, dass die Verbindung dauerhaft dicht ist.

Bei der in Fig. 3 dargestellten Verbindung für ein Anschluss- oder Verbindungsteil wird im Wesentlichen wie oben beschrieben verfahren. Ein Wellrohr (24) wird an einem formhinterschneidenden Ansatz (25) eines Anschlussteils (26) koaxial angeordnet, wobei sowohl der eine Formhinterschneidung bildende Ansatz als auch die endständigen Wellenberge (27) des Wellrohres (24) mit einer Beschichtung (28) versehen sind, die der zuverlässigen Abdichtung der Verbindung dient. Über das Wellrohr (24) und den eine Formhinterschneidung bildenden Ansatz (25) liegt die Muffe (29), die vorzugs-, aber nicht notwendigerweise bereits vorgeformt ist. Die Muffe (29) bildet im Zusammenwirken mit der Beschichtung (28) zunächst eine dichte Verbindung aus.

Durch einen Nachformvorgang, der mechanisch, thermisch oder auf mechanisch-thermische Weise die Muffe (29) nochmals verformt, wird eine Verringerung der Spaltmaße und gleichzeitiges Ausfüllen eventuell vorhandener Hohlräume in der Verbindung erreicht. Dabei kann gegebenenfalls ein Teil der Beschichtung (28) nach außen verdrängt werden. Durch die nachträgliche Verformung erhält die Muffe (29) eine umlaufende Vertiefung (30), eine Mehrzahl rillenartige Vertiefungen oder eine Mehrzahl Einsenkungen anderer Geometrie. Die Beschichtung (28) wird abschließend wie oben beschrieben ausgehärtet.

Die Erfindung hat also den Vorteil, dass an ein Leitungsendstück eines Wellrohres lediglich durch Auftragen einer Beschichtung und einem nachfolgenden Ur- oder Umformvorgang ein Anschluss- oder Verbindungsteil angeformt werden kann und gleichzeitig eine dichte Verbindung zwischen Formteil und Leitungsende des Wellrohres erreicht wird.

### Bezugszeichenliste

- 1: Bezugszeichenliste
- 2: Leitungsende
- 3: Endständige Welle
- 4: Endständige Welle
- 5: Endständige Welle
- 6: Hohlraum
- 7: Hintere Stirnseite
- 8: Mantelfläche
- 9: Vordere Stirnseite
- 10: Bohrung
- 11: Mantelfläche
- 12: Einlegeteil
- 13: Formteil
- 14: Mantelfläche
- 15: Mantelfläche
- 16: Beschichtung
- 17: Außenseite der Beschichtung [15]
- 18: Wellrohr
- 19: Anschlussteil
- 20: Rückseite des Anschlussteils [18]
- 21: Muffe
- 22: Rille
- 23: Endständiger Wellenberg
- 24: Beschichtung
- 25: Wellrohr
- 26: Formhinterschneidender Ansatz
- 27: Anschlussteil
- 28: Endständige Wellenberge
- 29: Beschichtung
- 30: Muffe
- 31: Umlaufende Vertiefung

## Patentansprüche

1. Anschluss- oder Verbindungsteil für ein Wellrohr oder eine Wellschlauchleitung, enthaltend:
ein durch Urformen erzeugtes Formteil (12),
das in etwa konzentrisch zur Wellrohr- oder Wellschlauchleitung eine Bohrung (9) und eine dem Verwendungszweck angepasste Außenkontur hat, wenigstens die endständige Welle (2) des Wellrohres oder -schlauches formschlüssig umgreift
und aus einer Formmasse besteht,
ein Leitungsende (1) eines parallel oder spiralgewellten Wellrohres oder Wellschlauches,
dessen Mittelachse in etwa konzentrisch zur Mittelachse der Bohrung (9) im Formteil ausgerichtet ist
und bei dem wenigstens die endständige Welle (2) und/oder ein Wellenabschnitt innerhalb der Konturlinie des Formteiles (12) angeordnet ist, eine aushärtbare Beschichtung (15),
die vor dem Gussvorgang wenigstens auf die endständige Welle (2), einen Wellenabschnitt oder ein geformtes Ende des Wellrohres oder Wellschlauches aufgetragen und keine polymere Beschichtung ist,
wobei das Leitungsende (1) mitsamt der aushärtbaren Beschichtung (15) in ein Formwerkzeug eingelegt wird, einen Teil der Kontur bildet und nach dem Füllvorgang eine formschlüssige Verbindung zwischen dem Formteil (12) (der Formmasse) und dem Leitungsende (1) entstanden ist,
**dadurch gekennzeichnet, dass**
die aushärtbare, nicht polymere, Beschichtung (15) eine sich verfestigende Schicht ist.

2. Anschluss- oder Verbindungsteil für ein Wellrohr oder eine Wellschlauchleitung nach Patentanspruch 1,
**dadurch gekennzeichnet, dass**
die aushärtbare, nicht polymere, Beschichtung (15) nachgiebig ist.

3. Anschluss- oder Verbindungsteil für ein Wellrohr oder eine Wellschlauchleitung nach Patentanspruch 2
**dadurch gekennzeichnet, dass**
die aushärtbare, nicht polymere, Beschichtung (15) eine sich verfestigende und quellende Schicht ist.

4. Anschluss- oder Verbindungsteil für ein Wellrohr oder eine Wellschlauchleitung nach einem der Patentansprüche 1 bis 3,
**dadurch gekennzeichnet, dass**
das durch Urformen erzeugte Formteil eine Muffe (20) ist.

5. Anschluss- oder Verbindungsteil nach Patentanspruch 4,
**dadurch gekennzeichnet, dass**
das durch Urformen erzeugte Formteil eine Muffe (29) ist, die wenigstens einen formhinterschneidenden Ansatz (25) des Anschlussteils (26) und wenigstens den endständigen Wellenberg (27) des Wellrohres oder Wellschlauches formschlüssig umgreift.

6. Anschluss- oder Verbindungsteil nach einem der Ansprüche 1 bis 5,
**dadurch gekennzeichnet, dass**
der Urformvorgang ein Gieß- und/oder Spritzguss- und/oder Rüttel- und/oder Sinter- und/oder Polymerisations- und/oder Polykondensationsverfahren ist.

7. Anschluss- oder Verbindungsteil nach einem der Ansprüche 1 bis 6,
**dadurch gekennzeichnet, dass**
die Formmasse ein reaktionsfähiges und/oder verfestigbares Stoffgemisch, eine Schmelze oder ein Komprimat ist.

8. Anschluss- oder Verbindungsteil nach einem der Ansprüche 1 bis 7,
**dadurch gekennzeichnet, dass**
die aushärtbare Beschichtung ein reaktionsfähiges Stoffgemisch, ein Klebstoff oder eine Suspension aus einem physikalisch aushärtenden Stoffgemisch ist.

## Claims

1. A connecting or linking part for a corrugated tube or a corrugated hose line containing:
a moulding (12) produced by primary moulding,
which has a bore (9) approximately concentrically to the corrugated tube or corrugated hose line and an outer contour adapted to the usage purpose, which embraces at least the terminal corrugation (2) of the corrugated tube or hose in positive manner
and consists of a moulding compound,
a line end (1) of a parallel or spirally corrugated, corrugated tube or corrugated hose,
the central axis whereof is aligned approximately concentrically to the central axis of the bore (9) in the moulding,
and in which at least the terminal corrugation (2) and/or a corrugated portion is arranged inside the contour line of the moulding (12),
a hardenable coating (15),
which is applied before the casting process at least to the terminal corrugation (2), a corrugated portion or a moulded end of the corrugated tube or corrugated hose and which is not a polymer coating,
wherein the line end (1) together with the hardenable coating (15) is inserted in a moulding tool, forms a part of the contour and after the filling process a positive connection is produced between the moulding (12) (the moulding compound) and the line end (1),
**characterized in that**
the hardenable non-polymer coating (15) is a solidifying layer.

2. The connecting or linking part for a corrugated tube or a corrugated hose line according to patent claim 1,
**characterized in that**
the hardenable, non-polymer coating (15) is resilient.

3. The connecting or linking part for a corrugated tube or a corrugated hose line according to patent claim 2,
**characterized in that**
the hardenable non-polymer coating (15) is a solidifying and swelling layer.

4. The connecting or linking part for a corrugated tube or a corrugated hose line according to one of patent claims 1 to 3,
**characterized in that**
the moulding produced by primary moulding is a bushing (20) .

5. The connecting or linking part according to patent claim 4,
**characterized in that**
the moulding produced by the primary moulding is a bushing (29) which positively embraces at least one form-undercutting shoulder (25) of the connecting part (26) and at least one terminal corrugation crest (27) of the corrugated tube or corrugated hose.

6. The connecting or linking part according to one of claims 1 to 5,
**characterized in that**
the primary moulding process is a casting and/or injection moulding and/or shaking and/or sintering and/or polymerization and/or polycondensation process.

7. The connecting or linking part according to one of claims 1 to 6,
**characterized in that**
the moulding compound is a reactive and/or solidifiable substance mixture, a melt or a compressed substance.

8. The connecting or linking part according to one of claims 1 to 7,
**characterized in that**
the hardenable coating is a reactive substance mixture, an adhesive or a suspension of a physically hardening substance mixture.

## Revendications

1. Pièce de raccordement ou d'assemblage pour un conduit en tube ondulé ou en flexible ondulé, comprenant :
une pièce moulée (12), créée par façonnage
qui de manière approximativement concentrique par rapport au conduit en tube ondulé ou en flexible ondulé dispose d'un perçage (9) et d'un contour extérieur adapté à sa vocation,
entoure par complémentarité de forme au moins l'ondulation (2) de terminaison du tube ou flexible ondulé
et qui est constituée d'une masse de moulage,
une extrémité de conduit (1) d'un tube ondulé ou flexible ondulé, pourvue d'ondulations parallèles ou hélicoïdales,
dont l'axe médian est orienté de manière approximativement concentrique par rapport à l'axe médian du perçage (9) dans la pièce moulée et sur laquelle au moins l'ondulation (2) de terminaison et/ou un segment d'ondulation est placé(e) à l'intérieur de la ligne de contour de la pièce moulée (12),
un revêtement (15) durcissable,
qui avant l'opération de coulée est appliqué au moins sur l'ondulation (2) de terminaison, sur un tronçon d'ondulation ou sur une extrémité moulée du tube ondulé ou flexible ondulé et qui n'est pas un revêtement polymère,
l'extrémité de conduit (1) avec le revêtement (15) durcissable étant insérée dans un outil de moulage, formant une partie du contour et après le processus de remplissage, un assemblage par complémentarité de forme ayant pris naissance entre la pièce moulée (12) (la masse de moulage) et l'extrémité de conduit (1),
**caractérisée en ce que**
le revêtement (15) durcissable non polymère est une couche qui se solidifie.

2. Pièce de raccordement ou d'assemblage pour un conduit en tube ondulé ou en flexible ondulé selon la revendication 1,
**caractérisée en ce que**
le revêtement (15) durcissable, non polymère est souple.

3. Pièce de raccordement ou d'assemblage pour un conduit en tube ondulé ou en flexible ondulé selon la revendication 2,
**caractérisée en ce que**
le revêtement (15) durcissable non polymère est une couche qui gonfle et se solidifie.

4. Pièce de raccordement ou d'assemblage pour un conduit en tube ondulé ou en flexible ondulé selon l'une quelconque des revendications 1 à 3,
**caractérisée en ce que**
la pièce moulée créée par façonnage est un manchon (20).

5. Pièce de raccordement ou d'assemblage selon la revendication 4,
**caractérisée en ce que**
la pièce moulée créée par façonnage est un manchon (20) qui entoure par complémentarité de forme au moins un embout (25) de contre-dépouille de la forme de la pièce de raccordement (26) et au moins le sommet d'onde (27) de terminaison du tube ondulé ou du flexible ondulé.

6. Pièce de raccordement ou d'assemblage selon l'une quelconque des revendications 1 à 5,
**caractérisée en ce que**
le processus de façonnage est un procédé de coulée et/ou de moulage par injection et/ou de vibration et/ou de frittage et/ou de polymérisation et/ou de polycondensation.

7. Pièce de raccordement ou d'assemblage selon l'une quelconque des revendications 1 à 6,
**caractérisée en ce que**
la masse de moulage est un mélange de matières réactif et/ou susceptible de se solidifier, une masse fondue ou un comprimé.

8. Pièce de raccordement ou d'assemblage selon l'une quelconque des revendications 1 à 7,
**caractérisée en ce que**
le revêtement durcissable est un mélange de matières réactif, un agent adhésif ou une suspension en un mélange de matières physiquement durcissant.
